# EUROPEAN PATENT SPECIFICATION

(11) **EP 2 899 099 B1**
(45) Date of publication and mention of the grant of the patent: **21.06.2017**
(21) Application number: 14152870.3
(22) Date of filing: 28.01.2014
(51) Int. Cl.: B62D 21/15, F16B 31/00

(54) **An active crash structure arrangement**
Aktive Unfallstrukturanordnung
Agencement de structure d'impact actif

(43) Date of publication of application: 29.07.2015
(73) Proprietor: Autoliv Development AB, 447 83 Vårgårda (SE); Bayerische Motoren Werke Aktiengesellschaft, 80809 München (DE)
(72) Inventor: Rydsmo, Erik, SE-466 95 Sollebrunn (SE); Hoiss,Franz, 82347 Bernried (DE)
(74) Representative: Parry, Simon James

(56) References cited:
- WO-A1-2013/125998
- US-A1- 2010 032 983

## Description

The present invention relates to an active crash structure arrangement for a motor vehicle.

In the design of modern motor vehicles, the energy absorption characteristic of the vehicle structure during a crash is an important consideration. During a crash the occupants of a motor vehicle can be subjected to dangerous crash loads which may cause severe injuries. Such crash loads arise due to the very high acceleration to which the occupants of a vehicle are subjected in the event of a crash. The level of acceleration to which the occupants are subjected during an impact event is highly influenced by the stiffness of the vehicle structure. It is therefore usual to provide motor vehicles with so-called crumple- or deformation-zones within their structure which are configured to deform in the event of an impact-type crash and thereby absorb collision energy in order to reduce the acceleration levels experienced by the occupants, and thereby reduce the risk of injuries to the occupants. By absorbing a substantial amount of collision energy within the crumple zones of the vehicle, the occupants are subjected to a lower acceleration during the crash.

A front sub-frame of a motor vehicle is normally fixed to the vehicle chassis by means of a number of nut-and-bolt connectors, and active crash structure arrangements have been proposed previously which are actuable in response to a signal from a crash sensor or from a predictive pre-crash sensor to disconnect the sub-frame from the vehicle chassis in the likely or actual event of crash in order to improve the energy absorption properties of the vehicle specifically for the crash scenario, whilst usually retaining a more rigid structure during normal conditions to improve the driving dynamics of the vehicle.

WO2013/125998 discloses a separation fastener assembly for use in a motor vehicle to releasably connect a structural member of the vehicle to the vehicle chassis.

It is an object of the present invention to provide an improved active crash structure arrangement. It is another object of the present invention to provide a motor vehicle including an improved active crash structure arrangement.

According to a first aspect of the present invention, there is provided an active crash structure arrangement for a motor vehicle, the arrangement having a primary structure and a secondary structure, said structures being interconnected by i) a first connector which fixedly interconnects said primary and secondary structures, and also initially by ii) a second connector which releasably interconnects said primary and secondary structures, wherein said first and second connectors are spaced-apart from one another, and the secondary structure includes a predefined deformation zone located between the first and second connectors, the second connector being actuated upon receipt of a release signal to release its connection between the primary and secondary structures, and the deformation zone of the secondary structure being configured to deform upon the application of a crash force to the secondary structure after actuation of the second connector.

Conveniently, said deformation zone is prevented from deforming substantially upon the application of said crash force to the secondary structure unless and until the second connector is actuated to release its connection between the primary and secondary structures.

Advantageously, said deformation zone of the secondary structure is configured to deform only upon said application of a crash force in excess of a predetermined threshold level. Optionally, said deformation zone is configured to deform upon the application of a said crash force acting in a direction substantially aligned with an axis passing through both of said connectors.

Conveniently, said deformation zone of the secondary structure includes at least one predefined region of relative mechanical weakness.

Advantageously, the or each region of relative mechanical weakness is defined by a region of the deformation zone which has a reduced thickness relative to the rest of the secondary structure.

Optionally, said deformation zone is formed integrally with the rest of the secondary structure.

Alternatively, said deformation zone is formed in a separate element which is connected to the secondary structure.

Conveniently, the second connector comprises a pyrotechnic charge and is configured to release its connection between the primary and secondary structures upon ignition of the pyrotechnic charge.

Optionally, the second connector comprises a bolt which is initially arranged to pass through an aperture in the primary structure, and though an aperture in the secondary structure. Advantageously, at least one of said apertures is larger than the diameter of the bolt such that the aperture is oversized.

Conveniently, the or each oversized aperture is elongate in a direction substantially aligned with an axis passing through both of said connectors.

According to another aspect of the present invention, there is provided a motor vehicle including an active crash structure arrangement of the type defined above, wherein said primary structure forms the chassis of the vehicle, and said secondary structure forms a front sub-frame of the vehicle. Alternatively, it is envisaged that the secondary structure could form a rear sub-frame of the vehicle.

Conveniently, said first and second connectors are spaced apart from one another along an axis which is substantially parallel to the longitudinal axis of the vehicle.

Advantageously, in the case of the secondary structure forming a front sub-frame of the vehicle, said second connector is positioned closer to the front of the vehicle than said first connector. In the case of the secondary structure forming a rear sub-frame of the vehicle, then the second connector will be positioned closer to the rear of the vehicle than the first connector.

So that the invention may be more readily understood, and so that further features thereof may be appreciated, embodiments of the invention will now be described by way of example with reference to the accompanying drawings in which:
Figure 1 shows part of a motor vehicle structure;
Figure 2 is a perspective view, from above and the rear, of a front sub-frame forming part of the vehicle structure shown in figure 1;
Figure 3 is a partially sectioned perspective view, from below and the front, showing the sub-frame of figure 2 connected to the chassis of the vehicle structure;
Figure 4 is an enlarged cross-sectional view, from the opposite side to figure 3, showing the connection between the sub-frame and the chassis;
Figure 5 is a schematic partially sectioned view of the connection shown in figure 4;
Figure 6 shows a connector forming part of the connection of figures 4 and 5 in partially sectioned view;
Figure 7 is an exploded view showing the function of the connector of figure 6;
Figure 8 is a schematic perspective view showing part of the connection between the sub-frame and the chassis immediately prior to an impact crash;
Figure 9 is a view corresponding to figure 8, but which shows the connection at the instant of impact;
Figure 10 is a view corresponding to figure 9, showing the connection at a subsequent stage during the impact, after actuation; and
Figure 11 is a view corresponding to that of figure 10, showing the connection at a final stage in the impact.

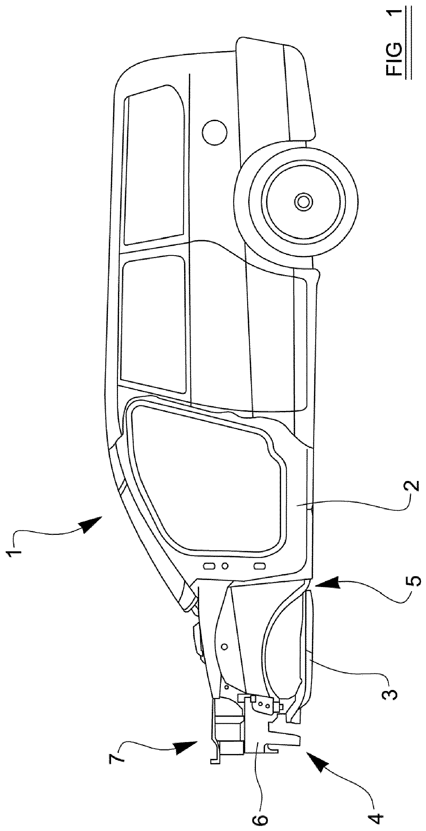

Turning now to consider the drawings in more detail, figure 1 shows part of a vehicle structure in which an embodiment of the present invention may be incorporated. The vehicle structure 1 includes a primary structure in the form of a chassis 2 and a secondary structure in the form of a front sub-frame 3. The vehicle structure is a unit body construction. The front sub-frame 3 forms part of the front structure 4 of the vehicle and may comprise longitudinally and transversely extending structural members. Normally the front sub-frame 3 is rigidly connected to the chassis at connection points 5 on respective sides of the vehicle structure. The front structure 4 of the vehicle will typically further comprise collapsible structural members 6 which are configured to define a so-called crumple- or deformation-zone 7 to absorb impact energy in the event of a frontal impact crash involving the vehicle.

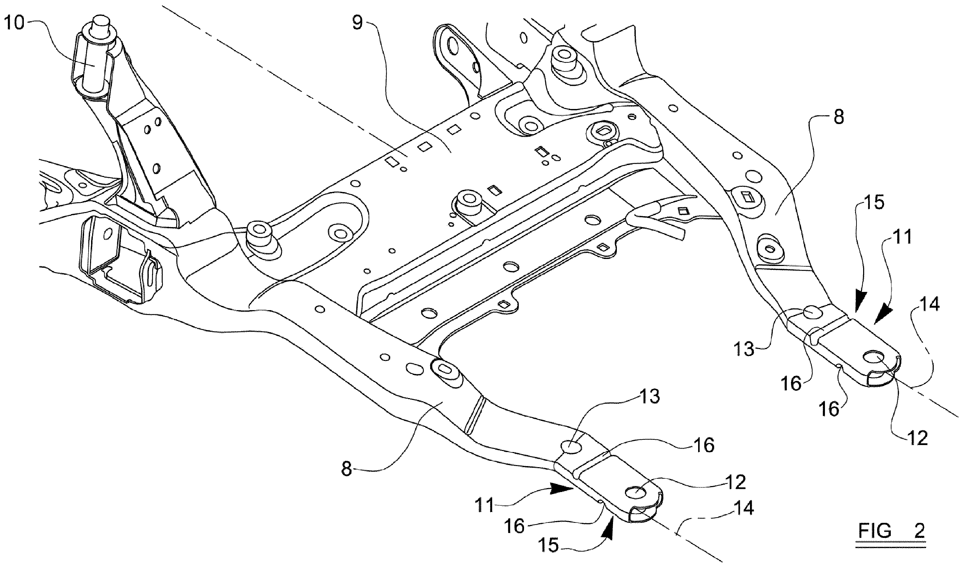

Figure 2 shows the sub-frame 3 in more detail. As will be noted, the sub-frame 3 comprises a pair of spaced apart longitudinal structural members 8 and a main transverse structural member 9 extending therebetween. The collapsible structural members 6 shown schematically in figure 1 are mounted to brackets 10 provided in the front region of the sub-frame 3.

The two longitudinal members 8 may be cranked as shown, and terminate in generally parallel end regions 11 which are parallel to the longitudinal axis L of the motor vehicle. Each end region 11 is provided with a respective pair of apertures 12, 13 with each pair including a rear aperture 12 which is located proximate to the end of the respective longitudinal member 8, and a front aperture 13 which is located closer to the front of the sub-frame 3 and will thus be located closer to the front of the vehicle when the sub-frame 3 is connected to the chassis 2 as illustrated in figure 1. The apertures 12, 13 of each pair are thus spaced apart along a respective axis 14 which is parallel to the longitudinal axis L of the vehicle.

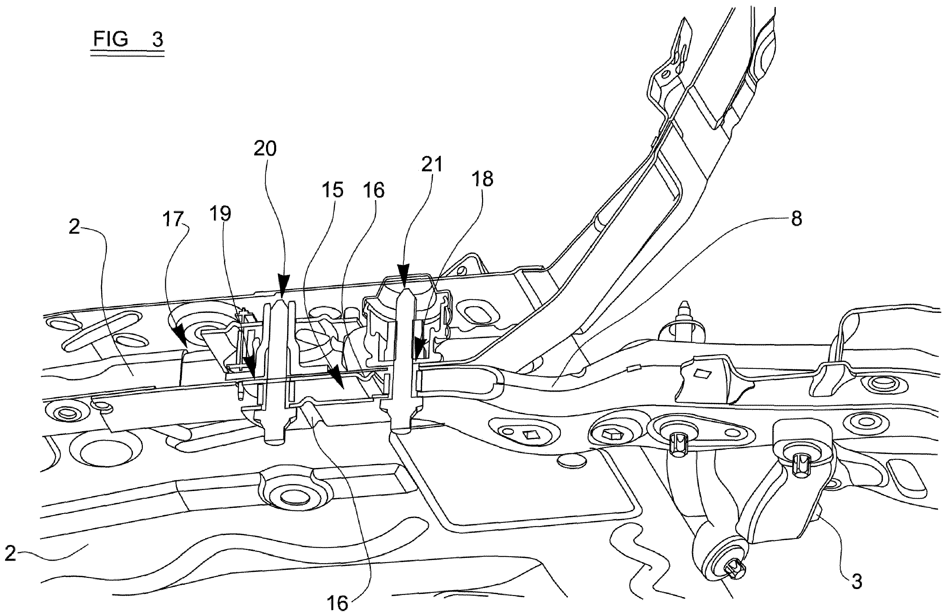

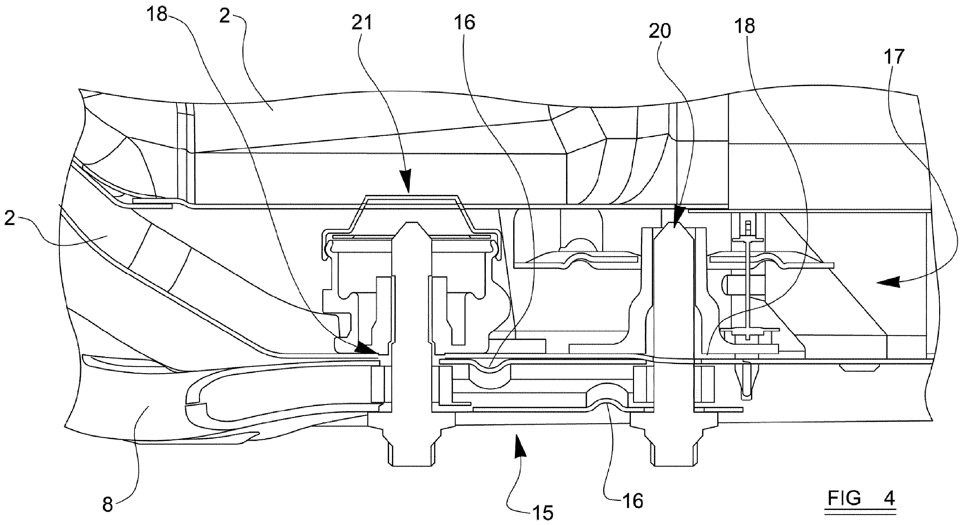

The two longitudinal members 8 of the sub-frame 3 are specially configured such that their regions located between the spaced-apart apertures 12, 13 form deformation regions 15. The deformation regions 15 can take various configurations, but in the embodiment illustrated, each deformation region 15 incorporates a pair of predefined regions of relative mechanical weakness defined by a pair of spaced apart recessed channels 16 formed across opposing sides of the longitudinal members 8. The channels 16 are shown most clearly in figures 3 and 4, in which the sub-frame 3 is shown connected to the chassis 2, and in these drawings it can be seen that the channels 16 form areas of reduced thickness relative to the rest of the longitudinal members 8. The channels 16 are each orthogonal to the axis 14 along which the respective pair of apertures 12, 13 are spaced-apart and thus run transversely relative to the vehicle.

As indicated above, figures 3 and 4 each show the manner in which the sub-frame 3 is connected to the chassis 2 in order to form the vehicle structure illustrated in figure 1. In particular, figures 3 and 4 show in detail how each longitudinal member 8 is connected to a respective front corner of the chassis 2, on opposing sides of the vehicle. As will be noted, in the particular embodiment illustrated, the chassis 2 incorporates a pair of channels 17 which extend longitudinally along respective sides of the chassis 2. Each channel 17 is provided with a pair of apertures 18, 19 through the lower region of the chassis 2, the apertures 17, 18 being spaced apart by substantially the same distance as the apertures 12, 13 of the sub-frame 3. The apertures 17, 18 in the chassis 2 thus align with the apertures 12, 13 provided in the sub-frame 3. However, although not clearly shown in the drawings, the forward-most aperture 18 in the chassis 2 may be somewhat elongate (for example oval) in the longitudinal direction along which the apertures 17, 18 are spaced apart.

The sub-frame 3 is offered up to the front region of the chassis 2 and the apertures 12, 13 through the longitudinal members 8 of the sub-frame 3 are aligned with respective apertures 18, 19 formed through the chassis. Two connectors 20, 21 are then installed through the aligned pairs of apertures 12, 18 and 13, 19 to connect the chassis 2 and sub-frame 3 together. The first connector 20 is arranged to be installed through the rearmost aligned apertures 13, 19 and so when installed as illustrated in figures 3 and 4 is located rearwardly of the second connector 21 which is installed through the forward-most aligned apertures 12, 18. The two connectors 20, 21 are importantly of different types.

The first, rearmost, connector 20 is configured to fixedly interconnect the chassis 2 and the sub-frame 3 and thus creates a connection which is permanent in the sense that it is sufficiently strong to remain substantially intact during a frontal impact involving the vehicle. The first connector can take various different forms, but is proposed to take the form of a simple connecting bolt of a type known *per se.* The second, forward-most, connector 21 however has a more sophisticated configuration and is configured to releasably interconnect the chassis 2 and the sub-frame 3 at a position spaced forwardly from the permanent connection provided by the first connector 20.

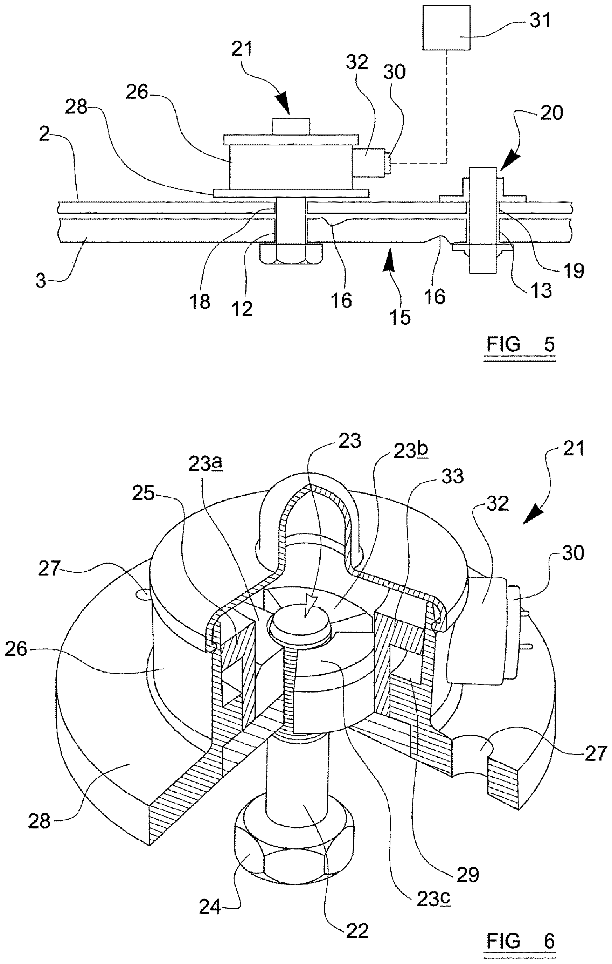

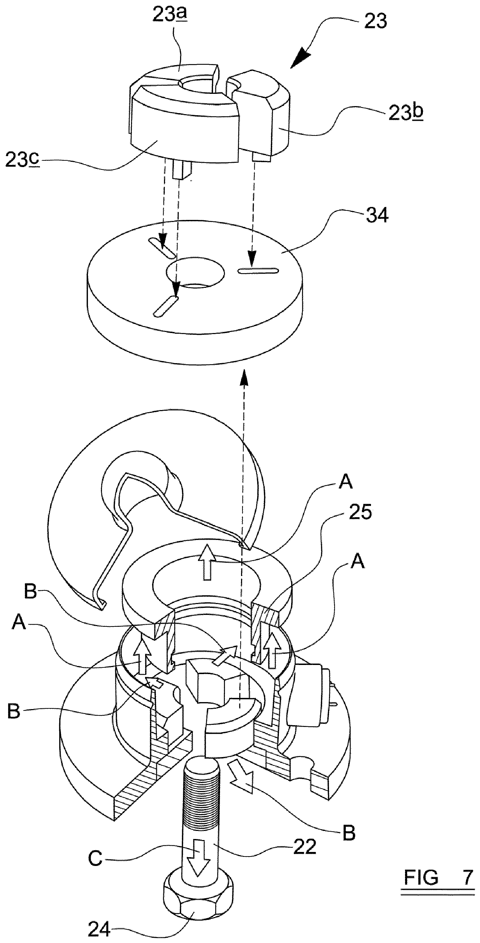

Figures 5 to 7 illustrated various aspects of a possible configuration of the second connector 21 in more detail. The particular connector 21 illustrated comprises a threaded bolt 22 and a nut 23 (not shown in Figure 5) having internal threads. The nut 23, which is shown in Figures 6 and 7, comprises three nut segments 23a, 23b, 23c. The bolt 22 extends through the aligned forward-most apertures 12, 18 in the sub-frame 3 and chassis 2, and is threadedly engaged with the segmented nut 23. The bolt 22 has a head 24 at its opposite end of the bolt 10 engages against the lower surface of the sub-frame's longitudinal member 8 as the bolt is drawn tight within the nut 23, thereby clamping the sub-frame 3 and the chassis 2 together. Alternatively, instead of providing an integral head 24 on the bolt 22, a nut having internal threads can be engaged with the lower end of the bolt 22.

The segmented nut 23 is retained by a retaining collar 25 arranged around the nut 23, as is best illustrated in Figure 6. The second connector 21 further comprises a housing 26 in which the segmented nut 23 and the collar 25 are arranged. The housing 26 may be attached to the vehicle chassis 3 by means of bolt connections whereby bolts (not shown) extend through holes 27 in a bottom flange 28 of the housing 26. A circumferential channel 29 is formed between the retaining collar 25 and the housing 26.

The second connector 21 further comprises an initiator device 30, which may take the form of a pyrotechnic squib and which is operatively connected, for example via an electrical control unit, to a sensor 31 which may take the form of a crash-sensor configured to generate a signal indicative of the vehicle sustaining an impact, or a predictive pre-crash sensor configured to generate a signal indicative of a likely or impending impact. The pyrotechnical squib 30 is located such that the retaining collar 25 is removed from the segmented nut 23 upon ignition of the squib 30. The squib 30 is received in a receiving portion 32 of the housing 26. In order to secure the squib 30 in position it may have external threads which are engaged with internal threads of the receiving portion 32. The receiving portion 32 of the housing 26, and thus also the squib 30, is in communication with the circumferential channel 29 through via aperture in the housing 26.

Having regard to figures 6 and 7, the function of the releasable connector 21 will now be described. Upon receipt of an actuating signal from the sensor 31 the squib 30 is ignited and produces a volume of gas at elevated pressure which is received in the circumferential channel 29. Due to the resulting elevated pressure inside the circumferential channel 29, an upwards force is applied on the flange 33 of the collar 25, thereby causing the collar 25 to move upwards and out of engagement with the segmented nut 23, as indicated by arrows A in Figure 7. Movement of the nut segments 23a, 23b, 23c in a radially outwards direction is then enabled. At this stage the bolt 22 becomes subjected to forces in a direction indicated by arrow C due to crash forces acting upon the front sub-frame 3 as will be described in more detail below. The nut segments 23a, 23b, 23c then become separated from the bolt 22 by means of forces from the bolt 22, as illustrated by arrows B in Figure 7. As indicated in Figure 7 the nut segments 23a, 23b, 23c may slide radially outwards in a sliding plate 34 that is mounted in the housing 26. Consequently, the connecting function of the second connector 21 is destroyed which enables displacement and deformation of the deformation region 15 of the sub-frame 3, as will now be described in more detail.

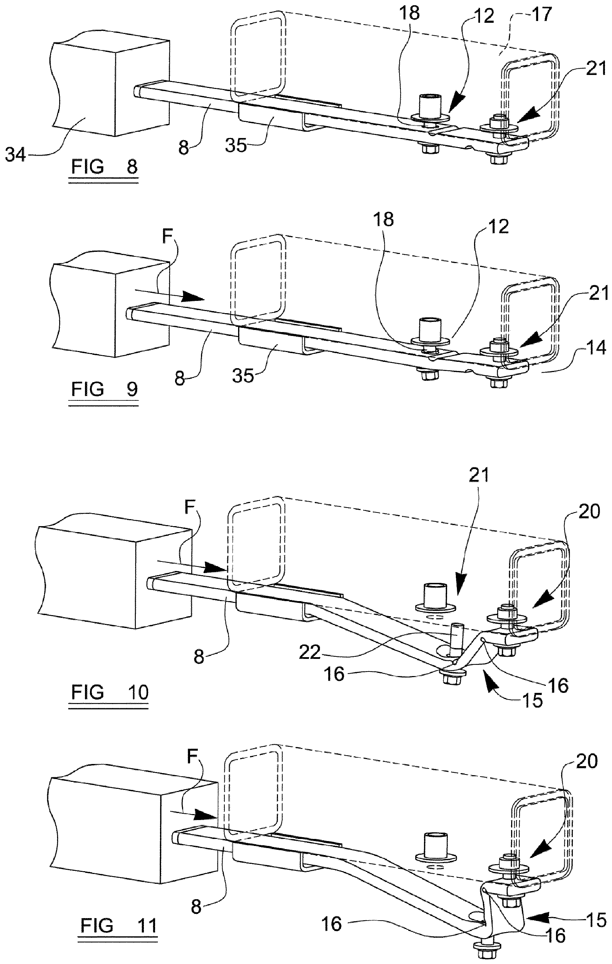

Turning now to consider figures 8 to 11, the function of the present invention in a crash scenario will be described. Figure 8 to 11 show successive stages in a simulated frontal impact crash with an external object such as another vehicle or a wall, the external object being represented in the drawings by a moving block 34. The drawings each show a channel part 17 of the vehicle chassis 2 and its connection, via the first and second connectors 20, 21, to a longitudinal beam 8 of the sub-frame 3. For convenience and clarity it will be noted that figures 8 to 11 do not show the rest of the structure of the sub-frame 3 which is located forwards of the longitudinal beam 8. Furthermore, for convenience and clarity the drawings show the block 34 impacting directly with the front of the longitudinal beam 8. As will be appreciated, in a vehicle installation of the type illustrated in figure 1, the front structure 6 of the sub-frame 3 will take the brunt of the force with an external object such as the block 34. Nevertheless, figures 8 to 11 conveniently illustrate the behaviour and function of the present invention at the point of connection between the sub-frame 3 and the chassis 2.

In the arrangement illustrated in figures 8 to 11, the longitudinal beam 8 is shown being guided for longitudinal sliding movement by a bracket 35 which may be affixed to the chassis 2.

Figure 8 shows the connection arrangement in its normal configuration prior to impact with the external object 34. In this configuration the longitudinal beam 8 is un-deformed and the first and second connectors 20, 21 are also both un-deformed, with both providing respective substantially rigid connections between the beam 8 and the channel part 17 of the chassis 2.

Figure 9 shows an early stage in a frontal impact crash in which a longitudinal component of crash force F is applied to the beam 8, in substantial alignment with the axis 14 along which the first and second connectors 20, 21 are spaced apart. In embodiments in which the forward-most aperture 18 provided in the chassis 3 is elongate (e.g. oval), then a degree of slippage between the longitudinal beam 8 and the chassis 3 will be permitted at the position of the second connector 21, which means that the rearward, first, connector 20 will absorb the majority of the crash forces during this stage of the impact. However, as the bolt 22 of the second connector 21 reaches the end of the elongate aperture 18 (or immediately in embodiments in which the forward-most aperture 18 in the chassis is not elongate), the bolt 22 of the second connector 21 will begin to deflect rearwardly as illustrated in figure 9. It is envisaged that at this point in time the second connector 21 will be actuated via ignition of the squib 30, thereby releasing the bolt 22 from the segmented nut 23.

As the impact continues, the crash forces acting on the sub-frame 2 will continue to push it rearwardly relative to the chassis 2. As illustrated in figure 10, the two channels 16 of the deformation region 15 of the beam 8 define crease-points along which the deformation region 15 of the beam will crease and deform in the event that the longitudinal component of the crash force F exceeds a predetermined threshold value. This deformation absorbs impact energy. Also, the configuration of the creases 16 is such that the part of the beam 8 through which the bolt 22 extends is urged downwardly, away from the chassis channel 17 to which it was initially connected by the second connector 21, thereby facilitating release of the bolt 22 from the now destroyed segmented nut 23.

Figure 11 shows a subsequent stage during the impact, and the resulting deformation of the beam 8 in its predefined deformation region 15 following actuation and release of the second connector 21. As will be noted, the first, rearward, connector 20 remains substantially intact during the impact, albeit with some deformation as illustrated in figure 11 which serves to absorb further impact energy.

As will therefore be appreciated, the crash structure of the present invention is a so-called "active" arrangement in the sense that it is actively switchable, upon receipt of a actuation signal from an appropriate sensor, from i) a first configuration in which the sub-frame 3 is substantially rigidly connected to the chassis 2 via multiple connection points thereby providing a rigid connection for good driving dynamics, to ii) a second configuration in which the deformation regions 15 are released for predetermined deformation in order to absorb impact energy in the event of a frontal impact, thereby reducing the acceleration forces to which occupants of the vehicle will be subjected in such an event.

Whilst the invention has been described above with reference to specific embodiments, it is to be appreciated that various modifications and changes can be made without departing from the scope of the invention. For example, whilst the invention has been described with particular reference to an embodiment in which the deformation regions 15 of the sub-frame 3 are formed as an integral part of the structure of the sub-frame 3, embodiments are envisaged in which the deformation region 15 could be defined as part of a separate component which is connected to the rest of the sub-frame 3.

Also, whilst the above-described embodiment has first, permanent, connectors 20 in the form of bolts, in other variants the permanent connectors could be provided in the form of welds between the sub-frame 3 and the chassis 2.

Furthermore, whilst the invention has been described above with reference to specific embodiments which are configured to absorb energy from a frontal impact, the invention could be embodied in arrangements configured to actuate and thereby absorb impact energy from different types of crash. For example, the secondary structure 3 could be provided in the form of a rear sub-frame instead of a front sub-frame as described above, and the arrangement could therefore be configured for actuation in the event of a rear-impact crash. When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An active crash structure arrangement for a motor vehicle, the arrangement having a primary structure (2) and a secondary structure (3), said structures being interconnected by i) a first connector (20) which fixedly interconnects said primary and secondary structures (2, 3), and also initially by ii) a second connector (21) which releasably interconnects said primary and secondary structures (2, 3), wherein said first and second connectors (20, 21) are spaced apart from one another, and the secondary structure (3) includes a predefined deformation region (15) located between the first and second connectors (20, 21), the arrangement being **characterised by** the second connector (21) being actuated upon receipt of a release signal to release its connection between the primary and secondary structures (2, 3), and the deformation region (15) of the secondary structure (3) being configured to deform upon the application of a crash force to the secondary structure (3) after actuation of the second connector (21).

2. An active crash structure arrangement according to claim 1, wherein said deformation region (15) is prevented from deforming substantially upon the application of said crash force to the secondary structure (3) unless and until the second connector (21) is actuated to release its connection between the primary and secondary structures (2, 3).

3. An active crash structure according to claim 1 or claim 2, wherein said deformation region (15) of the secondary structure is configured to deform only upon said application of a crash force in excess of a predetermined threshold level.

4. An active crash structure according to any preceding claim, wherein said deformation region (15) is configured to deform upon the application of a said crash force acting in a direction substantially aligned with an axis (14) passing through both of said connectors (20, 21).

5. An active crash structure according to any preceding claim, wherein said deformation region (15) of the secondary structure (3) includes at least one predefined region (16) of relative mechanical weakness.

6. An active crash structure according to claim 5, wherein the or each region of relative mechanical weakness (16) is defined by part of the deformation region (15) which has a reduced thickness relative to the rest of the secondary structure (3).

7. An active crash structure according to any preceding claim, wherein said deformation region (15) is formed integrally with the rest of the secondary structure (3).

8. An active crash structure according to any one of claims 1 to 6, wherein said deformation region (15) is formed in a separate element which is connected to the secondary structure (3).

9. An active crash structure according to any preceding claim, wherein the second connector (21) comprises a pyrotechnic charge (30) and is configured to release its connection between the primary and secondary structures (2, 3) upon ignition of the pyrotechnic charge (30).

10. An active crash structure according to any preceding claim, wherein the second connector (21) comprises a bolt (22) which is initially arranged to pass through an aperture (18) in the primary structure (2), and through an aperture (12) in the secondary structure (3).

11. An active crash structure according to claim 10, wherein at least one of said apertures (12, 18) is larger than the diameter of the bolt (22) such that the aperture is oversized.

12. An active crash structure according to claim 11, wherein the or each oversized aperture is elongate in a direction substantially aligned with an axis (14) passing through both of said connectors (20, 21).

13. A motor vehicle including an active crash structure arrangement according to any preceding claim, wherein said primary structure forms the chassis (2) of the vehicle, and said secondary structure forms a front sub-frame (3) of the vehicle.

14. A motor vehicle according to claim 13, wherein said first and second connectors (20, 21) are spaced apart from one another along an axis (14) which is substantially parallel to the longitudinal axis (L) of the vehicle.

15. A motor vehicle according to claim 14, wherein said second connector (21) is positioned closer to the front of the vehicle than said first connector (20).

## Patentansprüche

1. Aktive-Aufprall-Struktur-Anordnung für ein Kraftfahrzeug, wobei die Anordnung eine Primärstruktur (2) und eine Sekundärstruktur (3) aufweist, und wobei die Strukturen durch i) ein erstes Verbindungselement (20), das die Primär- und die Sekundär-Struktur (2, 3) fest miteinander verbindet, und anfänglich durch ii) ein zweites Verbindungselement (21), das die Primär- und die Sekundär-Struktur (2, 3) lösbar miteinander verbindet, miteinander verbunden sind, worin das erste und das zweite Verbindungselement (20, 21) voneinander beabstandet sind, und die Sekundärstruktur (3) eine vorbestimmte Verformungsregion (15) umfasst, die zwischen dem ersten und dem zweiten Verbindungselement (20, 21) angeordnet ist, wobei die Anordnung **dadurch gekennzeichnet ist, dass** das zweite Verbindungselement (21) bei Empfang eines Freigabesignals aktiviert wird, um dessen Verbindung zwischen der Primär- und der Sekundär-Struktur (2, 3) zu lösen, und die Verformungsregion (15) der sekundären Struktur (3) konfiguriert ist, sich bei Ausübung einer Aufprallkraft auf die sekundäre Struktur (3) nach Aktivierung des zweiten Verbindungselements (21) zu verformen.

2. Aktive-Aufprall-Struktur-Anordnung gemäß Anspruch 1, worin die Verformungsregion (15) im Wesentlichen bei Ausübung der Aufprallkraft auf die Sekundärstruktur (3) am Sich-Verformen gehindert wird, wenn und solange das zweite Verbindungselement (21) nicht aktiviert wird, um dessen Verbindung zwischen der Primär- und der Sekundär-Struktur (2, 3) zu lösen.

3. Aktive Aufprall-Struktur gemäß Anspruch 1 oder Anspruch 2, worin die Verformungsregion (15) der Sekundärstruktur konfiguriert ist, sich lediglich bei der Ausübung einer Aufprallkraft, die einen vorbestimmten Schwellenwertpegel übersteigt, zu verformen.

4. Aktive Aufprall-Struktur gemäß einem vorangegangenen Anspruch, wobei die Verformungsregion (15) konfiguriert ist, sich bei Ausübung der Aufprallkraft zu verformen, die in eine Richtung wirkt, die mit einer durch beide der Verbindungselemente hindurchtretenden Achse (14) im Wesentlichen fluchtend ausgerichtet ist.

5. Aktive Aufprall-Struktur gemäß einem vorangegangenen Anspruch, worin die Verformungsregion (15) der Sekundärstruktur (3) mindestens eine vorbestimmte Region (16) von relativer mechanischer Schwäche umfasst.

6. Aktive Aufprall-Struktur gemäß Anspruch 5, worin die oder jede Region von relativer mechanischer Schwäche (16) durch einen Teil der Verformungsregion (15) definiert ist, die eine reduzierte Dicke relativ zur verbleibenden Sekundärstruktur (3) aufweist.

7. Aktive Aufprall-Struktur gemäß einem vorangegangenen Anspruch, worin die Verformungsregion (15) einstückig mit der verbleibenden Sekundärstruktur (3) ausgebildet ist.

8. Aktive Aufprall-Struktur gemäß einem der Ansprüche 1 bis 6, worin die Verformungsregion (15) in einem separaten Element ausgebildet ist, das mit der Sekundärstruktur (3) verbunden ist.

9. Aktive Aufprall-Struktur gemäß einem vorangegangenen Anspruch, worin das zweite Verbindungselement (21) eine pyrotechnische Ladung (30) umfasst und konfiguriert ist, dessen Verbindung zwischen der Primär- und der Sekundär- Struktur (2, 3) bei Zündung der pyrotechnischen Ladung (30) zu lösen.

10. Aktive Aufprall-Struktur gemäß einem vorangegangenen Anspruch, worin das zweite Verbindungselement (21) einen Bolzen (22) umfasst, der anfänglich angeordnet ist, durch eine Öffnung (18) in der Primärstruktur (2) und durch eine Öffnung (12) in der Sekundärstruktur (3) hindurchzutreten.

11. Aktive Aufprall-Struktur gemäß Anspruch 10, worin mindestens eine der Öffnungen (12, 18) größer als der Durchmesser des Bolzens (22) ist, sodass die Öffnung überdimensioniert ist.

12. Aktive Aufprall-Struktur gemäß Anspruch 11, worin die oder jede überdimensionierte Öffnung in eine Richtung längsverlaufend ist, die mit einer durch beide der Verbindungselemente (20, 21) hindurchtretenden Achse (14) im Wesentlichen fluchtend ausgerichtet ist.

13. Kraftfahrzeug, umfassend eine aktive-Aufprall-Struktur-Anordnung gemäß einem vorangegangenen Anspruch, worin die Primärstruktur das Fahrgestell (2) des Fahrzeugs, und die Sekundärstruktur einen vorderen Unter-Rahmen (3) des Fahrzeugs bildet.

14. Kraftfahrzeug gemäß Anspruch 13, worin das erste und das zweite Verbindungselement (20, 21) entlang einer Achse (14) voneinander beabstandet angeordnet sind, die zur Längsachse (L) des Fahrzeugs im Wesentlichen parallel ist.

15. Kraftfahrzeug gemäß Anspruch 14, worin das zweite Verbindungselement (21) näher an der Vorderseite des Fahrzeugs als das erste Verbindungselement (20) positioniert ist.

## Revendications

1. Agencement de structure d'impact active pour un véhicule automobile, l'agencement comportant une structure principale (2) et une structure secondaire (3), lesdites structures étant interconnectées par i) un premier raccord (20) qui interconnecte de manière fixe lesdites structures principale et secondaire (2, 3), et également initialement par ii) un deuxième raccord (21) qui interconnecte de manière libérable lesdites structures principale et secondaire (2, 3), dans lequel lesdits premier et deuxième raccords (20, 21) sont espacés l'un de l'autre, et la structure secondaire (3) comprend une région de déformation prédéfinie (15) située entre les premier et deuxième raccords (20, 21), l'agencement étant **caractérisé en ce que** le deuxième raccord (21) est actionné lors de la réception d'un signal de libération pour libérer son raccordement entre les structures principale et secondaire (2, 3), et la région de déformation (15) de la structure secondaire (3) est configurée pour se déformer lors de l'application d'une force d'impact à la structure secondaire (3) après l'actionnement du deuxième raccord (21).

2. Agencement de structure d'impact active selon la revendication 1, dans lequel ladite région de déformation (15) ne peut pas se déformer sensiblement lors de l'application de ladite force d'impact à la structure secondaire (3) à moins que et jusqu'à ce que le deuxième raccord (21) soit actionné pour libérer son raccordement entre les structures principale et secondaire (2, 3).

3. Structure d'impact active selon la revendication 1 ou la revendication 2, dans laquelle ladite région de déformation (15) de la structure secondaire est configurée pour se déformer uniquement lors de ladite application d'une force d'impact dépassant un niveau de seuil prédéterminé.

4. Structure d'impact active selon l'une quelconque des revendications précédentes, dans laquelle ladite région de déformation (15) est configurée pour se déformer lors de l'application d'une dite force d'impact agissant dans une direction sensiblement alignée avec un axe (14) passant par les deux dits raccords (20, 21).

5. Structure d'impact active selon l'une quelconque des revendications précédentes, dans laquelle ladite région de déformation (15) de la structure secondaire (3) comprend au moins une région prédéfinie (16) présentant une faiblesse mécanique relative.

6. Structure d'impact active selon la revendication 5, dans laquelle la ou chaque région présentant une faiblesse mécanique relative (16) est définie par une partie de la région de déformation (15) qui a une épaisseur réduite par rapport au reste de la structure secondaire (3).

7. Structure d'impact active selon l'une quelconque des revendications précédentes, dans laquelle ladite région de déformation (15) est formée d'un seul tenant avec le reste de la structure secondaire (3).

8. Structure d'impact active selon l'une quelconque des revendications 1 à 6, dans laquelle ladite région de déformation (15) est formée en un élément séparé qui est raccordé à la structure secondaire (3).

9. Structure d'impact active selon l'une quelconque des revendications précédentes, dans laquelle le deuxième raccord (21) comprend une charge pyrotechnique (30) et est configuré pour libérer son raccordement entre les structures principale et secondaire (2, 3) lors du déclenchement de la charge pyrotechnique (30).

10. Structure d'impact active selon l'une quelconque des revendications précédentes, dans laquelle le deuxième raccord (21) comprend un boulon (22) qui est agencé initialement de manière à passer à travers une ouverture (18) dans la structure principale (2), et à travers une ouverture (12) dans la structure secondaire (3).

11. Structure d'impact active selon la revendication 10, dans laquelle au moins l'une desdites ouvertures (12, 18) est plus grande que le diamètre du boulon (22) de sorte que l'ouverture est surdimensionnée.

12. Structure d'impact active selon la revendication 11, dans laquelle la ou chaque ouverture surdimensionnée est allongée dans une direction sensiblement alignée avec un axe (14) passant par les deux dits raccords (20, 21).

13. Véhicule automobile comprenant un agencement de structure d'impact active selon l'une quelconque des revendications précédentes, dans lequel ladite structure principale forme le châssis (2) du véhicule, et ladite structure secondaire forme un châssis secondaire avant (3) du véhicule.

14. Véhicule automobile selon la revendication 13, dans lequel lesdits premier et deuxième raccords (20, 21) sont espacés l'un de l'autre le long d'un axe (14) qui est sensiblement parallèle à l'axe longitudinal (L) du véhicule.

15. Véhicule automobile selon la revendication 14, dans lequel ledit deuxième raccord (21) est positionné plus près de l'avant du véhicule que ledit premier raccord (20).
